# EUROPÄISCHE PATENTANMELDUNG

(11) **EP 1 964 774 A2**
(43) Veröffentlichungstag der Anmeldung: **03.09.2008**
(21) Anmeldenummer: 08003540.5
(22) Anmeldetag: 27.02.2008
(51) Int. Cl.: B64C 39/00

(54) **Fluggerät mit rotierenden Zylindern zur Erzeugung von Auftrieb und/oder Vortrieb**

(30) Priorität: 01.03.2007 DE 102007009951
(71) Anmelder: Bauhaus Luftfahrt e.V., 85748 Garching (DE)
(72) Erfinder: Seifert, Jost, Dr., 81927 München (DE)

(57) **Zusammenfassung**

Fluggerät mit einem Nutzlastrumpf 30 an dem um Querachsen 19 rotierende mit steuerbarer Drehzahl antreibbare geschlossene Zylinder 1 zur Erzeugung von Auftrieb und/oder Vortrieb nach dem Magnuseffekt angeordnet sind, wobei jedem Zylinder 1 zur Erzeugung eines ihn quer anströmenden Luftstromes ein Gebläse 2 mit einstellbarer Antriebsleistung zugeordnet ist.

## Beschreibung

Die vorliegende Erfindung bezieht sich auf ein Fluggerät mit einem Nutzlastrumpf an dem um Querachsen rotierende mit steuerbarer Drehzahl antreibbare geschlossene Zylinder zur Erzeugung von Auftrieb und/oder Vortrieb nach dem Magnuseffekt angeordnet sind.

Ein Fluggerät der vorbezeichneten Bauart ist aus dem Internet http://de.wikipedia.org/wiki/Rotorflugzeug bekannt. Wie beim historischen Rotorschiff von Flettner rotierende Zylinder zur Erzeugung von Vortrieb benutzt wurden, werden bei dem vorbekannten Rotorflugzeug die rotierenden Zylinder unter Ausnutzung des Magnuseffektes zur Erzeugung von Auftrieb benutzt. Obwohl die durch den Magnuseffekt erzielbaren Auftriebskräfte beachtliche Werte erreichen können, ist Voraussetzung dafür doch die Queranströmung der rotierenden Zylinder. Demzufolge kann bei dem vorbekannten Rotorflugzeug Auftrieb nur dann erzeugt werden, wenn, wie bei herkömmlichen Starrflügelflugzeugen durch hohe Vortriebsleistungen, eine beachtliche Marschgeschwindigkeit erreicht wurde. Demzufolge kann das vorbekannte Rotorflugzeug keine Kurzstart- oder gar Senkrechtstarteigenschaft aufweisen.

Aufgabe der vorliegenden Erfindung ist es, ein Fluggerät nach dem Oberbegriff des Patentanspruchs 1 so auszubilden, dass es Senkrecht- oder Kurzstarteigenschaften aufweist.

Erfindungsgemäß wird die gestellte Aufgabe von einem Fluggerät mit den Merkmalen des Patentanspruchs 1 gelöst. Demnach ist bei einem gattungsgemäßen Fluggerät jedem Zylinder zur Erzeugung eines in quer anströmenden Luftstromes ein Gebläse mit einstellbarer Antriebsleistung zugeordnet.

Durch die unmittelbare Kombination von Gebläse mit dem rotierenden Zylinder zur Ausnutzung des Magnuseffekts kann somit ein Kraftvektor in unterschiedliche Richtungen des Fluggeräts, also auch in Richtung der Hochachse, erzeugt werden und es kann damit ein senkrecht startendes oder kurz startendes Fluggerät verwirklicht werden.

Gegenüber bekannten Kurzstart- oder Senkrechtstartfluggeräten, wie z. B. dem Tiltrotorflugzeug oder dem Hubschrauber, weist ein erfindungsgemäßes Fluggerät erhebliche Vorteile auf. So ist z. B. nicht, wie beim Hubschrauber, eine Neigung der Rotorebene notwendig um die Marschgeschwindigkeit zu verändern; die Probleme von Rotorblättern bei Hubschraubern insbesondere bei Hochleistungshubschraubern durch Erreichen der Schallgeschwindigkeit der Blattspitzen fallen weg; auf einen Ausgleichsrotor, wie den üblichen Heckrotor bei Hubschraubern kann verzichtet werden. Als wesentlicher Vorteil des erfindungsgemäßen Fluggeräts sei hervorgehoben, dass eine Änderung der Queranströmung der rotierenden Zylinder nach Größe und Richtung mit technisch wenig aufwendigen Mitteln verwirklichbar ist und somit besonders agiles Flugverhalten des Fluggeräts erreichbar ist.

Obwohl für die Queranströmung der rotierenden Zylinder jede Art von Gebläse einsetzbar ist, also z. B. ein Propellergebläse oder auch ein Axialgebläse nach Art eines sogenannten Fans, wie er bei modernen Strahltriebwerksflugzeugen zur Anwendung kommt, wird als bevorzugte Ausführungsform der Erfindung vorgeschlagen, ein Radialgebläse einzusetzen, dessen Tragflügelprofil aufweisende Rotorblätter um parallel zur Rotationsachse ausgerichtete Achsen schwenkbar sind. Durch diese Ausgestaltung hat man hervorragende Möglichkeiten den Querstrom nach Größe und Richtung exakt zu steuern.

Aus der DE 36 15 089 A1 ist zwar ein Fluggerät mit Walzenflügeln bekannt, dessen Auftrieb und/oder Vortrieb durch ein Radialgebläse mit Tragflügelprofil aufweisenden Rotorblättern erzeugt wird, wobei die Rotorblätter um parallel zur Rotationsachse ausgerichtete Achsen schwenkbar sind. Nach der Lehre dieser Druckschrift wird jedoch die Auftriebs- oder Vortriebskraft allein durch das Radialgebläse bzw. mehrere solcher Radialgebläse erzeugt. Ein Hinweis auf die Ausnutzung des Magnuseffektes durch Kombination mit rotierenden Zylindern ist dieser Druckschrift nicht zu entnehmen.
Schließlich ist aus der DE 690 00 474 T2 eine Rotorbaugruppe zur Erzeugung von Auftriebs- und/oder Vortriebskräften bekannt, die ebenfalls als Radialgebläse mit profilierten Tragflügelrotorblättern ausgebildet ist. Die vorgenannte Druckschrift bezieht sich aber vor allem auf das Steuerungsverfahren zur Änderung der Anstellwinkel der Rotorblätter des Radialgebläses. Auch dieser Druckschrift ist ein Hinweis auf die Anwendung des Magnuseffekts nicht zu entnehmen.

Eine besonders vorteilhafte Ausgestaltung erfährt die Erfindung dadurch, dass der Rotor des Radialgebläses jeweils den quer anzuströmenden rotierenden Zylinder mit Abstand konzentrisch umgibt. Dadurch entsteht jeweils eine aus Querstromgebläse und rotierendem Zylinder bestehende Antriebseinheit zur Erzeugung der gewünschten Auftriebs- bzw. Vortriebskräfte, die nicht nur als Ganzes platzsparende kompakte Bauweise gewährleistet, sondern darüber hinaus durch die konzentrische Anordnung die Antriebsmechanik für das Radialgebläse und für den rotierenden Zylinder in baulich einfacher und kompakter Weise zu gestalten erlaubt.

Vorzugsweise soll der Radialabstand der rotierenden Rotorblätter von der Manteloberfläche des geschlossenen rotierenden Zylinders das Ein- bis Zweifache der Profiltiefe der Rotorblätter betragen. Der Durchmesser des Radialgebläserotors wiederum soll gemäß einer bevorzugten Ausführungsform der Erfindung das Fünf- bis Achtfache der Profiltiefe eines Rotorblattes betragen. Die Anzahl der für einen Radialgebläserotor einzusetzenden Rotorblätter soll mindestens zwei vorzugsweise acht betragen. Dabei soll in weiterer Ausbildung der Erfindung der Umfangsabstand der Rotorblätter des Radialgebläses zumindest so groß sein wie die Profiltiefe der Rotorblätter.

Weiterhin ist es vorteilhaft, wenn die Anstellwinkel der Rotorblätter des Radialgebläses periodisch mit der Rotation gesteuert werden. Vorzugsweise erfolgt die Steuerung des Anstellwinkels der Rotorblätter zentral durch eine Exzenterkurbel mit zu den einzelnen Rotorblättern verlaufenden Steuerstangen. Alternativ kann jedoch auch eine Steuerung der Anstellwinkel der Rotorblätter über ein Stellgetriebe erfolgen, welches ein um die Rotorachse des Radialgebläses rotierendes Antriebsrad und mit diesem zusammenwirkende radial zu jedem einzelnen Rotorblatt verlaufende Steuerwellen umfasst. Die letztgenannte Ausgestaltung ist insbesondere dann vorteilhaft, wenn hohe Anströmgeschwindigkeiten und damit vergleichsweise hohe Drehzahlen des Radialgebläses verwirklicht werden sollen.

In weiterer Ausbildung der Erfindung wird vorgeschlagen, dass, wie an sich im Stand der Technik bekannt, die Rotorblätter des Radialgebläses zur Veränderung des Tragflügelprofils mehrteilig ausgebildet sind. Eine solche Ausbildung ist insbesondere dann von Vorteil, wenn auch ein Betrieb bei niedrigen Anströmgeschwindigkeiten in Betracht gezogen wird.

Schließlich soll bei bevorzugten Ausführungsformen der Erfindung sowohl die Drehrichtung der geschlossenen Zylinder änderbar sein als auch die Drehzahl der geschlossenen Zylinder unabhängig von der Drehzahl des Radialgebläses einstellbar sein.

Bevorzugt sind bei einem Fluggerät symmetrisch zum Nutzlastrumpf beidseitig aus Querstromgebläse und rotierendem Zylinder bestehende Antriebseinheiten angeordnet. Durch deren exakte Steuerung kann eine Verschwenkung des Fluggeräts um dessen Längsachse bei Kurvenflug eingestellt werden. Schließlich ist es vorteilhaft, wenn ein Fluggerät zumindest zwei in Längsrichtung voneinander beabstandete, aus Querstromgebläse und rotierendem Zylinder bestehende Antriebseinheitenpaare aufweist.

Durch entsprechende Steuerung der in Längsrichtung beabstandeten Antriebseinheitenpaare wird dann eine Schwenkung des Fluggeräts um seine Querachse und/oder Hochachse erzielt.

Weitere vorteilhafte Ausgestaltungen der Erfindung entsprechend der Ansprüche 16 bis 18 werden im Rahmen der Beschreibung von Ausführungsbeispielen weiter unten erläutert.

Anhand der beigefügten Zeichnungen werden Ausführungsbeispiele der Erfindung erläutert. In den Zeichnungen zeigt
- Fig. 1: eine erste erfindungsgemäße Ausführungsform eines Fluggeräts mit zwei in Längsrichtung des Fluggeräts beabstandeten, aus Querstromgebläse und rotierendem Zylinder bestehenden Antriebseinheitenpaaren im Schrägbild,
- Fig. 2: eine schematische Darstellung einer aus Gebläse und rotierendem Zylinder bestehenden Antriebseinheit,
- Fig. 2a: eine schematische Darstellung einer Antriebseinheit entsprechend Fig. 2, wobei das Gebläse sich in Strömungsrichtung hinter dem rotierenden Zylinder befindet.
- Fig. 2b: eine schematische Darstellung einer Antriebseinheit nach Fig. 2a, wobei als Gebläse ein translatorisch quer zur Strömungsrichtung bewegter Tragflügel vorgesehen ist.
- Fig. 2c: eine schematische Darstellung der Antriebseinheit, entsprechend Fig. 2b, bei welcher der Tragflügel für translatorische und rotatorische Bewegung angepasst ist.,
- Fig. 3a: eine aus Radialgebläse und konzentrisch darin angeordnetem rotierendem Zylinder bestehende Antriebseinheit im Querschnitt schematisch,
- Fig. 3b: die Antriebseinheit gemäß Fig. 3a bei verändertem Anstellwinkel der Rotorblätter,
- Fig. 4: eine Darstellung entsprechend den Fig. 3a, 3b, jedoch mit eingezeichneten Bewegungs- und Kraftgrößen,
- Fig. 5: ein Stellgetriebe für die Steuerung des Anstellwinkels der Rotorblätter schematisch,
- Fig. 6: mehrteilig ausgebildete Rotorblätter eines Radialgebläses schematisch,
- Fig. 7: eine weitere Ausführungsform eines erfindungsgemäßen Fluggerätes in Schrägbilddarstellung entsprechend Fig. 1 und
- Fig. 8: eine dritte Ausführungsform eines erfindungsgemäßen Fluggerätes in Schrägbilddarstellung entsprechend Fig. 7.
- Fig. 9: die schematische Schrägbilddarstellung einer weiteren Ausführungsform eines rotierenden Zylinders 1 nach Fig. 2 mit drei Scheiben, deren Durchmesser da größer ist als der Zylinderdurchmesser di,
- Fig. 10: eine Antriebseinheit gemäß Fig. 3a, mit einem rotierenden Zylinder der Ausführungsform nach Fig. 9 im Schrägbild schematisch.

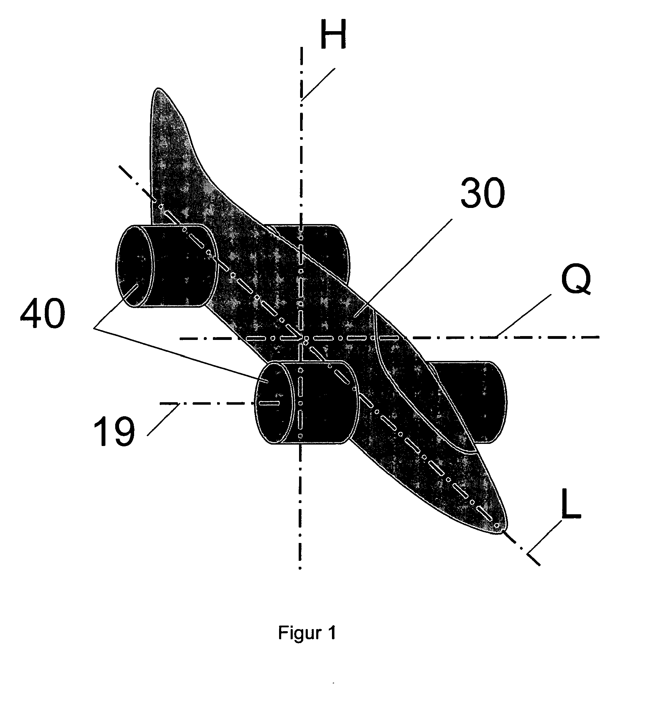

Das in Fig. 1 im Schrägbild dargestellte Fluggerät umfasst einen Nutzlastrumpf 30 an dem vier Antriebseinheiten 40 zur Erzeugung von Auftrieb und/oder Vortriebskräften angeordnet sind. Die Hauptachsen des Fluggeräts 30 sind eine Längsachse L, eine Querachse Q und eine Hochachse H. Jeweils zwei Antriebseinheiten 40 bilden ein Antriebseinheitenpaar und liegen sich symmetrisch zur Längsachse L des Fluggerätes gegenüber. Jede Antriebseinheit 40 umfasst, in Fig. 1 nicht mehr dargestellt, einen geschlossenen rotierenden Zylinder zur Erzeugung der Auftriebs- bzw. Vortriebskräfte nach dem Magnuseffekt und ein ihm zugeordnetes, ihn quer anströmendes Gebläse. Eine der Rotationsachsen einer Antriebseinheit 40 ist mit 19 bezeichnet.

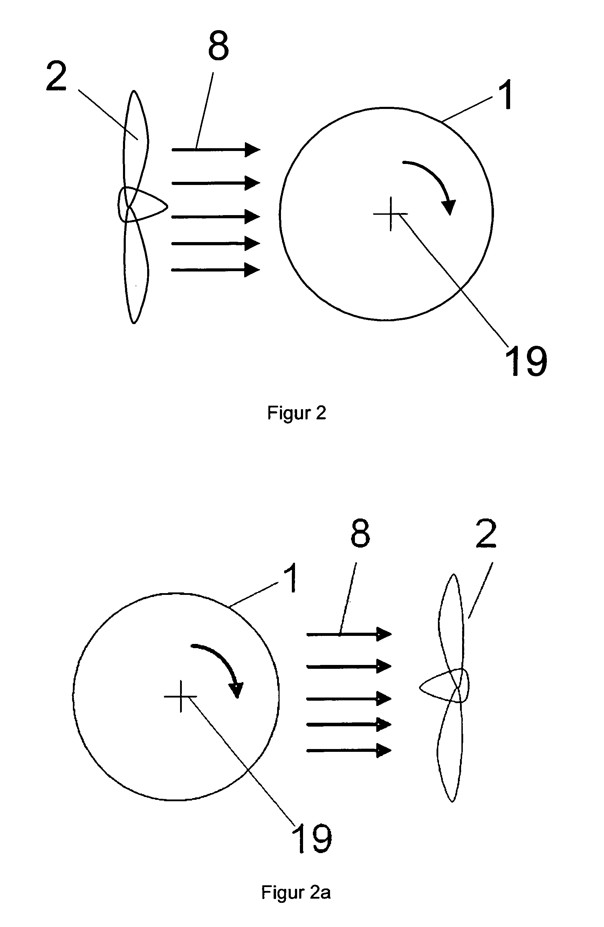

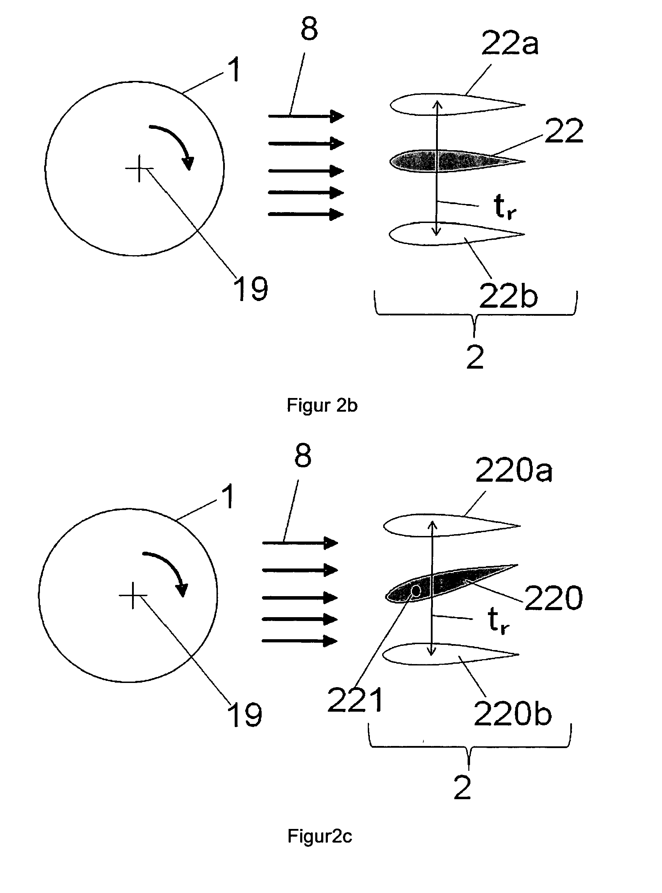

In Fig. 2 ist eine der Antriebseinheiten 40 schematisch dargestellt. Sie besteht aus einem rotierenden geschlossenen Zylinder 1, der um die Rotationsachse 19 entsprechend dem eingetragenen Pfeil rotiert. Der Zylinder 1 wird entsprechend den Pfeilrichtungen 8 quer angeströmt von einem Gebläse 2, welches durch einen Propellerflügel stilisiert dargestellt ist. Entsprechend der Lehre des Magnuseffekts bewirkt der rotierende Zylinder 1 eine Antriebskraft, die im wesentlichen quer zur Anströmrichtung 8 ausgerichtet ist. Durch Steuerung der Queranströmung 8 nach Richtung und Größe und durch Steuerung der Drehzahl des rotierenden Zylinders 1 kann die Antriebskraft aus dem rotierenden Zylinder 1 eingestellt werden.

In Fig. 2a ist eine der Figur 2 ähnliche Anordnung dargestellt, wobei sich hier das Gebläse 2 in Strömungsrichtung 8 hinter dem geschlossenen Zylinder 1 befindet.

In Fig. 2b ist eine dritte Ausführungsform der Antriebseinheiten 40 schematisch dargestellt. Sie besteht aus einem rotierenden geschlossenen Zylinder 1, der um die Rotationsachse 19 entsprechend dem eingetragenen Pfeil rotiert. Der Zylinder 1 wird entsprechend den Pfeilrichtungen 8 quer angeströmt von einem Gebläse 2, welches durch einen schlagenden Flügel 22 stilisiert dargestellt ist. Der schlagende Flügel bewegt sich translatorisch ohne Winkeländerung in Richtung des Pfeiles tr quer zur Richtung der zu erzeugenden Strömung 8 auf und ab zwischen den Endpositionen 22a und 22b. Der Impuls auf das Strömungsmedium ergibt sich durch das Tragflügelprofil des Flügels 22. Anstelle nur eines Flügels 22 können deren mehrere nach Art eines Flügelgitters eingeordnet sein.
Durch Steuerung der Queranströmung 8 nach Richtung und Größe und durch Steuerung der Drehzahl des rotierenden Zylinders 1 kann auch hier die Antriebskraft aus dem rotierenden Zylinder 1 eingestellt werden.

In Fig. 2c ist eine vierte Ausführungsform der Antriebseinheiten 40 schematisch dargestellt. Sie besteht aus einem rotierenden geschlossenen Zylinder 1, der um die Rotationsachse 19 entsprechend dem eingetragenen Pfeil rotiert. Der Zylinder 1 wird entsprechend den Pfeilrichtungen 8 quer angeströmt von einem Gebläse 2, welches durch einen schlagenden Flügel 220 stilisiert dargestellt ist. Der schlagende Flügel 220 führt eine zyklische Bewegung zwischen den Endpositionen 220a und 220b aus, die eine translatorische Querbewegung gemäß der eingezeichneten Pfeilrichtung tr und eine rotatorische Bewegung um die Achse 221 umfasst. Auch bei dieser Ausführungsform können mehrere Flügel 220 vorgesehen sein.
Durch Steuerung der Queranströmung 8 nach Richtung und Größe und durch Steuerung der Drehzahl des rotierenden Zylinders 1 kann auch hier die Antriebskraft aus dem rotierenden Zylinder 1 eingestellt werden.

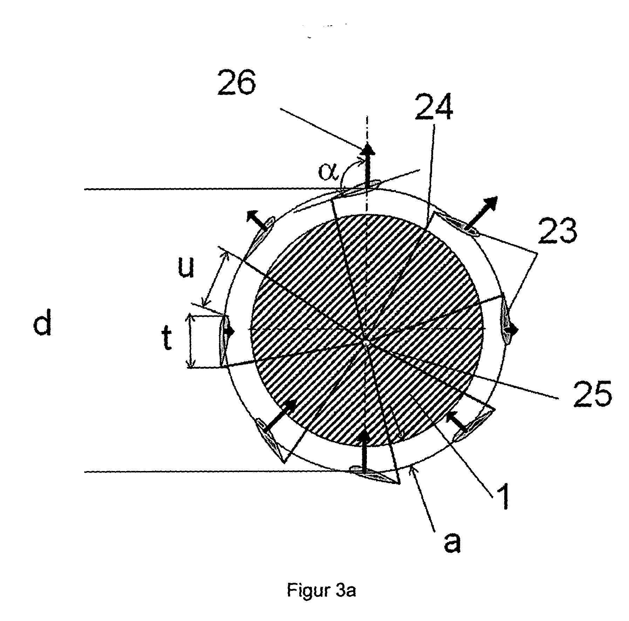

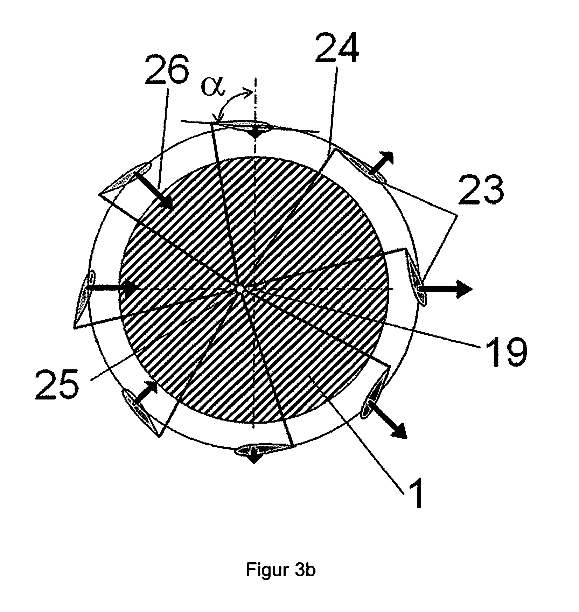

Die in den Fig. 3a und 3b dargestellte Antriebseinheit besteht wiederum aus einem zentralen geschlossenen (mittels nicht dargestellter Antriebseinrichtung) in Rotation versetzten Zylinder 1, um den herum konzentrisch ein Radialgebläse mit jeweils acht Rotorblättern 23 angeordnet ist. Der Anstellwinkel α der Rotorblätter 23 ist mittels Steuerstangen 24 veränderbar, wobei durch Anlenkung der Steuerstangen 24 an einer Exzenterkurbel 25 eine zyklische Änderung des Anstellwinkels α der Rotorblätter erzielt wird. Ein Vergleich der Fig. 3a mit der Fig. 3b zeigt die Veränderung des Anstellwinkels der Rotorblätter 23 und damit die Veränderung der Kraftvektoren 26 auf die Rotorblätter. Der Radialabstand der rotierenden Rotorblätter 23 vom Zylinder 1 ist mit a bezeichnet.

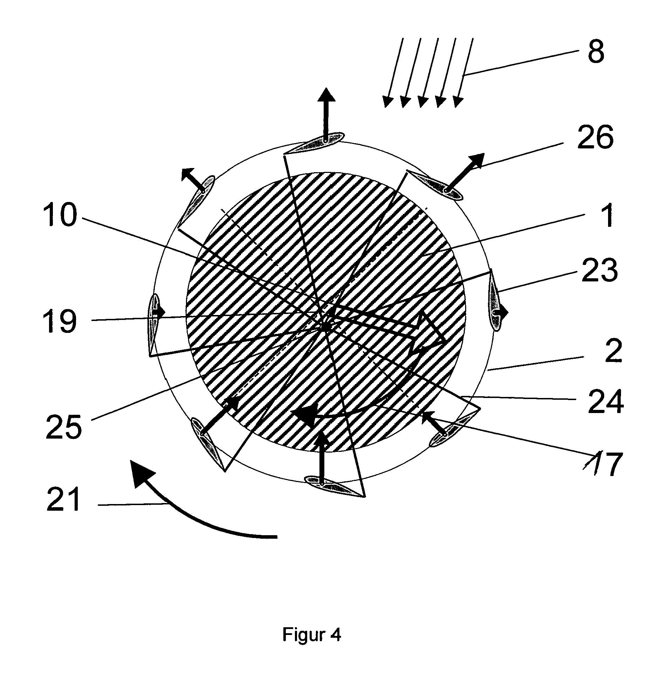

In der schematischen Darstellung gemäß Fig. 4, die im wesentlichen der Darstellung nach den Fig. 3a und 3b gleicht, sind zusätzlich zu den Elementen Zylinder 1 und Radialgebläse 2 mit den Rotorblättern 23, Steuerstangen 24 und dem Drehpunkt der Exzenterkurbel 25 noch dargestellt die Richtung 8 der durch das Radialgebläse 2 erzeugten Anströmung, die Kraftvektoren 26 der Rotorblätter, die Drehrichtung 17 des Zylinders 1, die Drehrichtung 21 des Radialgebläses 2 sowie der Kraftvektor 10 der Antriebseinheit der infolge der Anströmung 8 und der Rotation 17 zustande kommt.

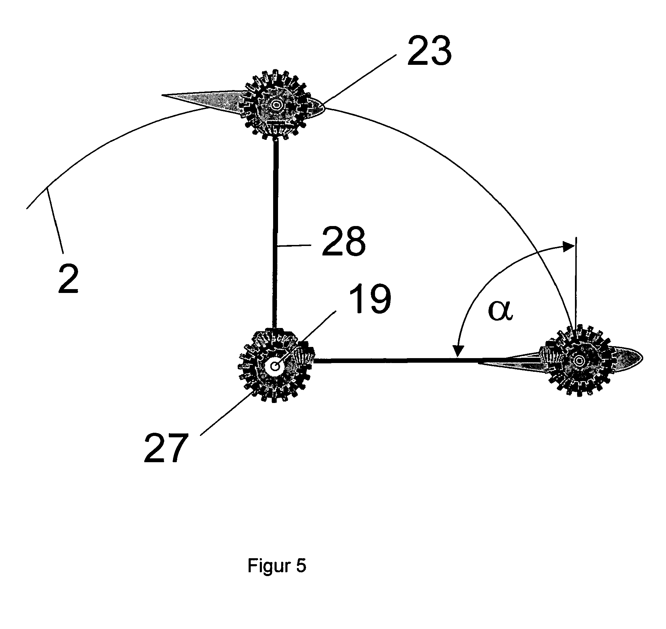

Fig. 5 zeigt schematisch ein Stellgetriebe für die Steuerung des Anstellwinkels α der Rotorblätter 23 des Radialgebläses 2. Ein um die Rotationsachse 19 des Radialgebläses 2 rotierendes Antriebsrad 27 treibt jeweils zu jedem einzelnen Rotorblatt 23 verlaufende Steuerwellen 28 an und erlaubt so eine zentrale Verstellung der Anstellwinkel α.

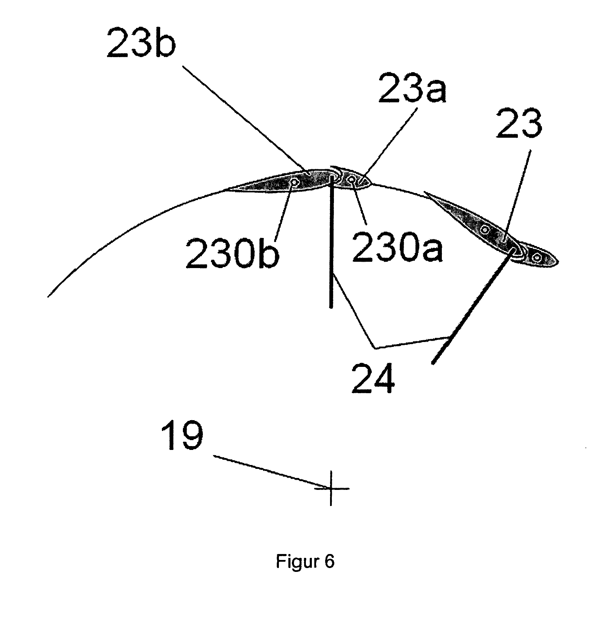

Fig. 6 zeigt die mehrteilige Ausbildung der Rotorblätter 23, wobei im gezeigten Ausführungsbeispiel jedes Rotorblatt zweiteilig mit einem ersten Abschnitt 23a und einem zweiten Blattabschnitt 23b ausgebildet ist, wobei jeder Abschnitt um eine parallel zur Rotationsachse 19 verlaufende Achse 230a, 230b schwenkbar ist und durch konkav/konvexes Ineinandergreifen der Rotorblattabschnitte 23a, 23b und eine Anlenkung der Steuerstange 24 am Rotorblattabschnitt 23b die Rotorblattgeometrie veränderbar ist.

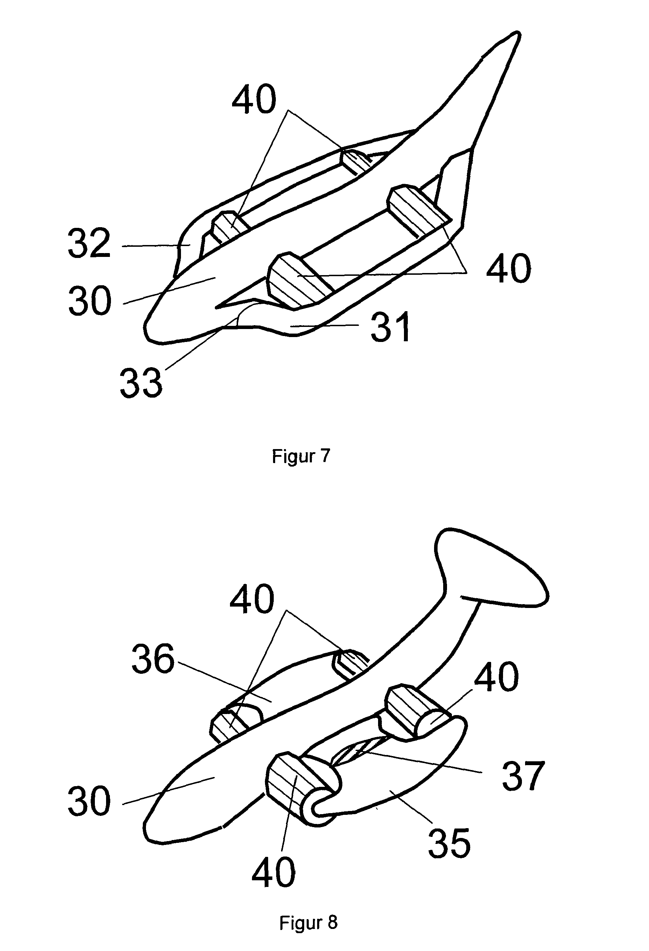

Die Schrägbilddarstellungen gemäß Fig. 7 und Fig. 8 entsprechen der Darstellung nach Fig. 1 und zeigen weitere Ausführungsformen eines erfindungsgemäßen Fluggerätes. Bei dem in Fig. 7 darstellten Fluggerät sind an den zentralen Nutzlastrumpf 30 jeweils seitlich Haltestrukturen 31, 32 angeformt, die auch zur Lagerung der aus rotierendem Zylinder und Querstromgebläse bestehenden Antriebseinheiten 40 dienen. Die Haltestrukturen 31, 32 sind zumindest in ihrem Frontbereich mit einem tragflügelähnlichen Profil 33 ausgestattet.

Die in Fig. 8 dargestellte weiteren Ausführungsform eines erfindungsgemäßen Fluggeräts weist symmetrisch am zentralen Nutzlastrumpf 30 angeordnete tragflügelähnliche Tragstrukturen 35, 36 auf, die sich jeweils in Flugrichtung und entgegen der Flugrichtung gabelförmig erstrecken und jeweils zwischen den Schenkeln eine aus rotierendem Zylinder und Querstromgebläse gebildete Antriebseinheit 40 aufnehmen. Die Zentralbereiche der Tragstrukturen 35, 36 sind vorzugsweise wiederum mit einer Tragflügelkontur 37 ausgestattet.

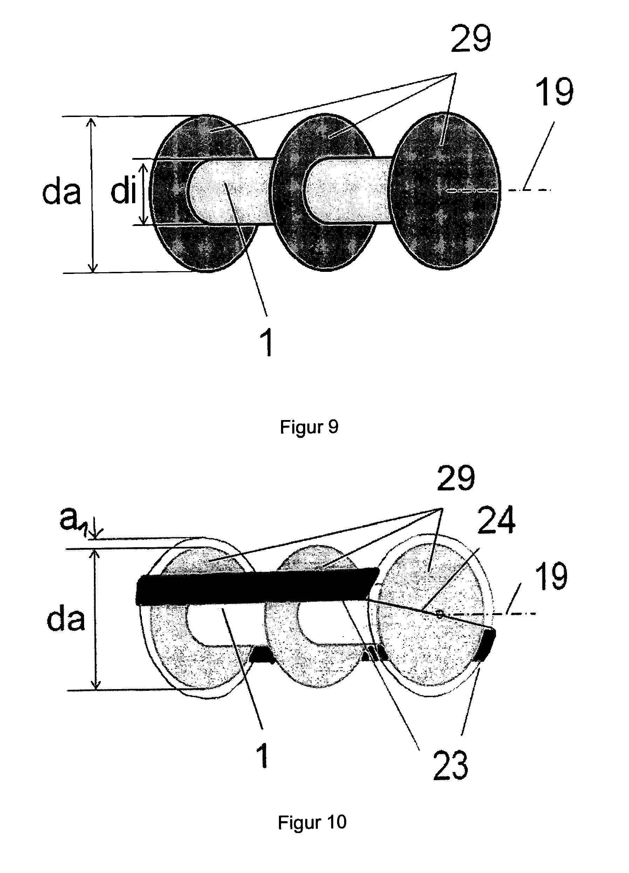

Die Schrägbilddarstellung gemäß Fig. 9 entspricht der Darstellung des Zylinders 1 nach Fig. 2 bis Fig. 2c und zeigt eine weitere Ausführungsform eines um die Achse 19 rotierenden Zylinders 1 mit drei Scheiben 29, deren Durchmesser größer ist als der Zylinderdurchmesser di. Durch die sich so ausbildenden vom Zylindermantel nach außen ragenden Schotwände der Höhe ½ x (da-di) lässt sich die aerodynamische Effizienz der Antriebseinheit steigern. Dabei müssen nicht, wie in Fig. 9 gezeigt, drei Scheiben bzw. Schotwände vorgesehen sein; bereits durch eine Scheibe bzw. Schotwand lassen sich Verbesserungen der Aerodynamik erzielen. Auch können z. B. nur die beiden Endscheiben am Zylinder 1 vorgesehen sein.

Die schematische Schrägbilddarstellung gemäß Fig. 10 zeigt eine Antriebseinheit 40 mit einem Radialgebläse, welches zwei Rotorblätter 23 und eine Steuerstange 24 umfasst. Der Rotationskreis der Rotorblätter 23 hat von der Außenkante der Scheiben 29 einen solchen Abstand a₁, dass bei der zugelassenen Schwenkbewegung der Rotorblätter im Betrieb keine Berührung der Scheiben 29 stattfindet.

## Patentansprüche

1. Fluggerät mit einem Nutzlastrumpf an dem um Querachsen rotierende mit steuerbarer Drehzahl antreibbare geschlossene Zylinder zur Erzeugung von Auftrieb und/oder Vortrieb nach dem Magnuseffekt angeordnet sind, **dadurch gekennzeichnet, dass** jedem Zylinder (1) zur Erzeugung eines ihn quer anströmenden Luftstromes (8) ein Gebläse (2) mit einstellbarer Antriebsleistung zugeordnet ist.

2. Fluggerät nach Anspruch 1, **dadurch gekennzeichnet, dass** das Gebläse (2) ein Radialgebläse ist, dessen Tragflügelprofil aufweisende Rotorblätter (23) um parallel zur Rotationsachse (19) ausgerichtete Achsen schwenkbar sind.

3. Fluggerät nach Anspruch 2, **dadurch gekennzeichnet, dass** der Rotor des Radialgebläses (2) jeweils den quer anzuströmenden rotierenden Zylinder (1) mit Abstand konzentrisch umgibt.

4. Fluggerät nach Anspruch 3, **dadurch gekennzeichnet, dass** der Radialabstand (a) der rotierenden Rotorblätter von der Manteloberfläche des geschlossenen Zylinders (1) das Einbis Zweifache der Profiltiefe (t) der Rotorblätter (23) beträgt..

5. Fluggerät nach einem oder mehreren der vorhergehenden Ansprüche, **dadurch gekennzeichnet, dass** der Durchmesser (d) des Radialgebläserotors das Fünf- bis Achtfache der Profiltiefe (t) eines Rotorblattes (23) beträgt.

6. Fluggerät nach einem oder mehreren der vorhergehenden Ansprüche, **dadurch gekennzeichnet, dass** der Umfangsabstand (u) der Rotorblätter (23) des Radialgebläses (2) zumindest so groß ist wie die Profiltiefe (t) der Rotorblätter.

7. Fluggerät nach einem oder mehreren der vorhergehenden Ansprüche, **dadurch gekennzeichnet, dass** das Radialgebläse(2) mindestens zwei vorzugsweise acht Rotorblätter (23) umfasst.

8. Fluggerät nach einem oder mehreren der vorhergehenden Ansprüche, **dadurch gekennzeichnet, dass** der Anstellwinkel (α) der Rotorblätter (23) des Radialgebläses (2) periodisch mit der Rotation gesteuert wird.

9. Fluggerät nach Anspruch 8, **dadurch gekennzeichnet, dass** die Steuerung des Anstellwinkels der Rotorblätter (23) zentral durch eine Exzenterkurbel (25) mit zu den einzelnen Rotorblättern (23) verlaufenden Steuerstangen (24) erfolgt.

10. Fluggerät nach Anspruch 8, **dadurch gekennzeichnet, dass** die Steuerung der Anstellwinkel (α) der Rotorblätter (23) über ein Stellgetriebe erfolgt, welches ein um die Rotationsachse (19) des Radialgebläses (2) rotierendes Antriebsrad (27) und mit diesem zusammenwirkende radial zu jedem einzelnen Rotorblatt (23) verlaufende Steuerwellen (28) umfasst.

11. Fluggerät nach einem oder mehreren der vorhergehenden Ansprüche, **dadurch gekennzeichnet, dass** die Rotorblätter (23) zur Veränderung ihres Tragflügelprofils mehrteilig ausgebildet sind (Abschnitte 23a, 23b).

12. Fluggerät nach einem oder mehreren der vorhergehenden Ansprüche, **dadurch gekennzeichnet, dass** die Drehrichtung der geschlossenen Zylinder (1) einstellbar ist.

13. Fluggerät nach einem oder mehreren der vorhergehenden Ansprüche, **dadurch gekennzeichnet, dass** die Drehzahl der geschlossenen Zylinder (1) unabhängig von der Drehzahl des Gebläses (2) einstellbar ist.

14. Fluggerät nach einem oder mehreren der vorhergehenden Ansprüche, **dadurch gekennzeichnet, dass** symmetrisch zum Nutzlastrumpf (30) beidseitig aus Querstromgebläse (2) und rotierendem Zylinder (1) bestehende Antriebseinheiten (40) angeordnet sind.

15. Fluggerät nach einem oder mehreren der vorhergehenden Ansprüche, **dadurch gekennzeichnet, dass** zumindest zwei in Längsrichtung (L) des Fluggeräts beabstandete, aus Querstromgebläse (2) und rotierendem Zylinder (1) bestehende Antriebseinheitenpaare vorgesehen sind.

16. Fluggerät nach einem oder mehreren der vorhergehenden Ansprüche, **dadurch gekennzeichnet, dass** zumindest eine Scheibe (29) in Strömungsrichtung (8) am rotierenden Zylinder (1) angeordnet ist, deren Durchmesser da größer ist als der Durchmesser di des Zylinders (1).

17. Fluggerät nach einem oder mehreren der vorhergehenden Ansprüche, **dadurch gekennzeichnet, dass** das Gebläse (2) durch mindestens einen schlagenden Flügel (22) ausgebildet ist, der translatorisch (Pfeilrichtung tr) quer zur Strömungsrichtung (8) bewegt wird.

18. Fluggerät nach einem oder mehreren der vorhergehenden Ansprüche, **dadurch** gezeichnet dass das Gebläse (2) durch mindstens einen schlagenden Flügel (220) ausgebildet ist, welcher translotorisch quer zur Strömungsrichtung (8) bewegt wird und dabei zugleich eine (Pfeilrichtung tr) zyklische rotatorische Bewegung um eine Achse (221) senkrecht zur translatorischen Bewegungsrichtung ausführt.
